## Europäisches Patentamt
## European Patent Office
## Office européen des brevets

(19)

(11) Veröffentlichungsnummer: **0 133 199**
**B1**

(12) # EUROPÄISCHE PATENTSCHRIFT

(45) Veröffentlichungstag der Patentschrift:
14.12.88

(51) Int. Cl.⁴: **G 01 D 5/244**, G 01 B 7/00

(21) Anmeldenummer: 84105198.0

(22) Anmeldetag: 08.05.84

(54) Anordnung zur Fehlerüberwachung bei einer Messeinrichtung.

(30) Priorität: 28.06.83 DE 3323281

(43) Veröffentlichungstag der Anmeldung:
20.02.85 Patentblatt 85/8

(45) Bekanntmachung des Hinweises auf die Patenterteilung:
14.12.88 Patentblatt 88/50

(84) Benannte Vertragsstaaten:
AT CH DE FR GB IT LI NL SE

(56) Entgegenhaltungen:
AT-B-353 492
DE-A-2 020 393
DE-B-2 161 684
DE-C-1 498 173
DE-C-2 022 151

(73) Patentinhaber: Dr. Johannes Heidenhain GmbH,
Nansenstrasse 17, D-8225 Traunreut (DE)

(72) Erfinder: Schmitt, Walter, Ing. grad.,
Hochgernstrasse 22, D-8225 Traunreut (DE)

**Beschreibung**

Die Erfindung betrifft eine Meßeinrichtung mit einer Fehlerüberwachung gemäß dem Oberbegriff der Ansprüche 1 und 2.

Aus der AT-B-353 492 ist eine fehlergesicherte inkrementale Wegmeßeinrichtung bekannt, bei der eine Meßteilung von vier Abtastern zur Erzeugung von vier zueinander phasenversetzten Binärsignalen abgetastet wird. Ein logisches Netzwerk erzeugt an seinem Ausgang ein Binärsignal, das gleich einem ausgewählten der vier Binärsignale der Abtaster ist, wenn an seinem Eingang eine erlaubte Kombination dieser Binärsignale bei fehlerfreiem Arbeiten der Abtaster anliegt, und das ungleich dem ausgewählten Binärsignal ist, wenn an seinem Eingang eine verbotene Kombination dieser Binärsignale bei fehlerhaftem Arbeiten der Abtaster anliegt. Das vom logischen Netzwerk erzeugte Binärsignal und das ausgewählte Binärsignal steuern in einer Auswerteeinheit jeweils über einen Richtungsdiskriminator einen Zähler an, deren Zählergebnisse von einem Komparator verglichen werden, der von einem Taktsignal beaufschlagt ist. Bei einem Gleichstand der zu vergleichenden Zählergebnisse der beiden Zähler und bei einem einwandfreien Arbeiten des Komparators liegt an dessen Ausgang wiederum dieses Taktsignal vor, dessen Vorhandensein das einwandfreie Arbeiten der gesamten Einrichtung anzeigt. Dieses Taktsignal durchläuft vor dem Komparator nacheinander noch eine Reihe von Vergleichern, die zur Überwachung der Fehlerfreiheit der Schalt- und Verknüpfungselemente des logischen Netzwerkes jeweils Paare von Signalen dieser Elemente auf Gleichheit überprüfen. Diese Einrichtung benötigt zur Überwachung der Fehlersicherheit vier phasenversetzte Binärsignale und eine Auswerteeinheit mit jeweils einem Richtungsdiskriminator und einem Zähler sowie eine eigene Übertragungsleitung für das Taktsignal vom logischen Netzwerk zum Komparator in der Auswerteeinheit.

Der DE-A-2 020 393 entnimmt man eine Einrichtung zur Fehlersicherung bei inkrementalen Meßeinrichtungen zur Messung der Relativlage zweier Objekte, bei der die bei der Abtastung eines Maßstabs mittels einer Abtasteinheit gewonnenen phasenversetzten Abtastsignale gleichzeitig einer Auswerteeinheit und einer Fehlerüberwachungseinheit zur Kontrolle des gegenseitigen Phasenwinkels und der Amplitudenhöhen der Abtastsignale zugeführt werden. Bei fehlerhaften Signalparametern dieser Abtastsignale wird ein Fehlersignal dieser Fehlerüberwachungseinheit über eine eigene Übertragungsleitung einer Warnlampe zugeleitet, die in der Auswerteeinheit vorgesehen sein kann.

Aus der DE-PS-2 022 151 ist eine Einrichtung zur Fehlervermeidung bei inkrementalen Meßeinrichtungen zur Messung der Relativlage zweier Objekte bekannt, bei der die bei der Abtastung eines Maßstabs mittels einer Abtasteinheit gewonnenen phasenversetzten Abtastsignale gleichzeitig einer Auswerteeinheit und einer Fehlerüberwachungseinheit zur Kontrolle des gegenseitigen Phasenwinkels und der Amplitudenhöhe der Abtastsignale zugeführt werden. Bei fehlerhaften Signalparametern dieser Abtastsignale z. B. infolge Verschmutzung, Alterung oder Verschleiß der Meßeinrichtung wird ein Fehlersignal dieser Fehlerüberwachungseinheit über eine eigene Übertragungsleitung einer Warnlampe zugeleitet, die in der Auswerteeinheit vorgesehen sein kann.

Weiter ist es bekannt, bei einer inkrementalen Meßeinrichtung zur Fehlerüberwachung die Abtastsignale und ihre invertierten Signale während der Dauer des Störungsfalles durch das Fehlersignal hochohmig zu schalten, so daß die Störung auf die Auswerteeinheit wie ein Leitungsbruch wirkt. Diese Art der Signalübertragung hat den Vorteil, daß für das Fehlersignal keine gesonderte Übertragungsleitung erforderlich ist, weist aber den Nachteil auf, daß das Erkennen der hochohmigen Signale insbesondere bei großen Längen der Übertragungsleitungen wegen der Leitungskapazität nur relativ langsam erfolgen kann, weil zur Ladungsumkehr keine Treiberfunktion vorhanden ist.

Der Erfindung liegt die Aufgabe zugrunde, eine Meßeinrichtung mit einer Fehlerüberwachung anzugeben, die auf einfache Weise ein verzögerungsfreies Erkennen eines Fehlerfalles ohne eigene Übertragungsleitung für das Fehlersignal erlaubt.

Diese Aufgabe wird erfindungsgemäß durch eine Meßeinrichtung mit den Merkmalen der Ansprüche 1 und 2 gelöst.

Die mit der Erfindung erzielten Vorteile bestehen insbesondere darin, daß zum verzögerungsfreien Erkennen eines Fehlerfalles für das Fehlersignal keine gesonderte Übertragungsleitung erforderlich ist, die bei einem Leitungsbruch ein Erkennen dieses Fehlerfalles unmöglich macht. In einer bevorzugten Anordnung wird erreicht, daß auch bei Auftreten eines Fehlerfalles verwertbare Abtastsignale vorliegen, so daß der Meßvorgang nicht unterbrochen zu werden braucht.

Vorteilhafte Weiterbildungen der Erfindung entnimmt man den Unteransprüchen.

Ausführungsbeispiele der Erfindung werden anhand der Zeichnung näher erläutert.
Es zeigen

Figur 1 eine lichtelektrische inkrementale Längenmeßeinrichtung,
Figur 2 eine logische Funktionstabelle der Signale nach Figur 1,
Figur 3 eine bevorzugte Schaltungsanordnung und
Figur 4 eine logische Funktionstabelle der Signale nach Figur 2.

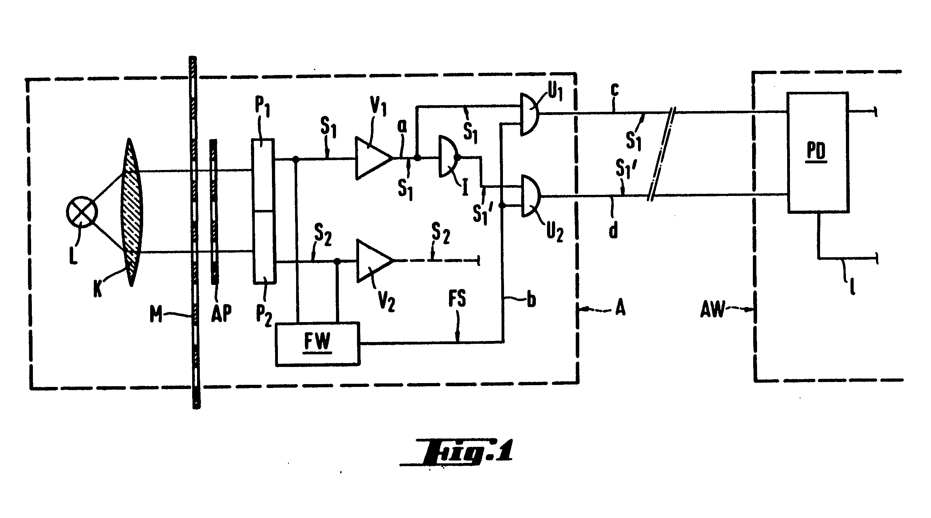

In Figur 1 ist schematisch eine lichtelektrische inkrementale Längenmeßeinrichtung mit einem Maßstab M und einer Abtasteinheit A dargestellt, die in nicht gezeigter Weise jeweils mit einem der zu messenden Objekte, beispielsweise mit Maschinenteilen einer Bearbeitungsmaschine verbunden sind. Die Abtasteinheit A weist zur Abtastung der Teilung des Maßstabs M eine Abtastplatte AP mit einer identischen Teilung auf. Das Licht einer Lampe L durchsetzt über einen Kondensor K die Teilungen des Maßstabs M und der Abtastplatte AP und fällt auf zwei Photoelemente $P_1$, $P_2$, die bei der Bewegung des Maßstabs M relativ zur Abtastplatte AP aus dem modulierten Lichtstrom periodische elektrische Analogsignale $S_1$, $S_2$ erzeugen, die jeweils in Verstärkern $V_1$, $V_2$ verstärkt werden. Das verstärkte Signal $S_1$ wird einmal einem Inverter I und zum anderen dem ersten Eingang eines ersten Und-Gatters $U_1$ zugeführt, während das invertierte Signal $S_1'$ am Ausgang des Inverters I dem ersten Eingang eines zweiten Und-Gatters $U_2$ zugeleitet wird. Das Ausgangssignal $S_1$ des Und-Gatters $U_1$ wird über eine Leitung c und das invertierte Ausgangssignal $S_1'$ des Und-Gatters $U_2$ über eine Leitung d einem Phasendiskriminator PD einer externen Auswerteeinheit AW zugeführt. In der oben beschriebenen Weise kann auch das Ausgangssignal $S_2$ des Verstärkers $V_2$ einem Inverter und zwei Und-Gattern zugeführt werden.

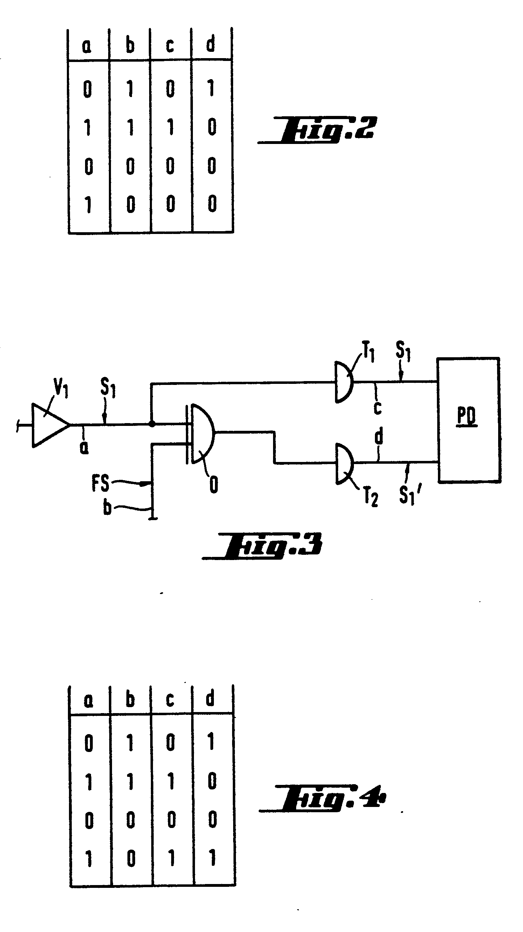

Die Analogsignale $S_1$, $S_2$ am Ausgang der Photoelemente $P_1$, $P_2$ werden gleichzeitig einer Fehlerüberwachungseinheit FW zur Kontrolle beispielsweise der gegenseitigen Phasenlage und der Amplitudenhöhe zugeleitet; eine solche Fehlerüberwachungseinheit ist z. B. in der DE-PS-2 022 151 beschrieben. Im Falle fehlerhafter Signalparameter dieser Analogsignale $S_1$, $S_2$ wird von der Fehlerüberwachungseinheit FW ein Fehlersignal FS an die zweiten Eingänge der Und-Gatter $U_1$, $U_2$ abgegeben, das ein Gleichphasigschalten der Signale $S_1$, $S_1'$ an den Ausgängen der Und-Gatter $U_1$, $U_2$ bewirkt. Der Phasendiskriminator PD erkennt die Gleichphasigkeit der Signale $S_1$, $S_1'$, die im ungestörten Betriebsfall gegenphasig sind, und bewirkt eine beliebige Fehlermeldung über eine Leitung 1 in der Auswerteeinheit AW. In Figur 2 ist eine logische Funktionstabelle der Signale $S_1$ FS, $S_1$, $S_1'$ auf den Leitungen a - d der Figur 1 dargestellt. In gleicher Weise können auch die im ungestörten Fall gegenphasigen Signale $S_2$, $S_2'$ im Fehlerfall vom Fehlersignal FS gleichphasig geschaltet und vom Phasendiskriminator PD ausgewertet werden; es können aber auch die Signale $S_2'$ $S_2$ von einem weiteren Fehlersignal einer weiteren Fehlerüberwachungseinheit gleichphasig geschaltet werden, so daß verschiedene Fehler erkannt werden können.

In Figur 3 ist eine bevorzugte Schaltungsanordnung dargestellt, bei der das Signal $S_1$ am Ausgang des Verstärkers $V_1$ und das Fehlersignal FS gemäß Figur 1 jeweils einen Eingang eines Exclusiv-Oder-Gatters O beaufschlagen. Das Signal $S_1$ und das Ausgangssignal $S_1'$ des Exclusiv-Oder-Gatters O werden jeweils einer Treiberstufe $T_1$, $T_2$ zugeführt, deren Ausgangssignale $S_1'$ $S_1'$ über Leitungen c, d dem Phasendiskriminator PD der Figur 1 zur Auswertung zugeleitet werden; die Treiberstufen $T_1$, $T_2$ können aber auch entfallen. In Figur 4 ist eine logische Funktionstabelle der Signale $S_1$, FS, $S_1$, $S_1'$ auf den Leitungen a - d der Figur 3 dargestellt. Bei Auftreten eines Störungsfalls bewirkt das Fehlersignal FS ein Gleichphasigschalten der Signale $S_1$, $S_1'$ auf den Leitungen c, d, das vom Phasendiskriminator PD zur Fehlermeldung erkannt wird. Wie aus der logischen Funktionstabelle in Figur 4 hervorgeht, liegen trotz des Fehlerfalls verwertbare Signale $S_1$, $S_1'$ vor, so daß der Meßvorgang nicht unterbrochen zu werden braucht.

Die logischen Gatter $U_1$, $U_2$, O, sowie die Treiberstufen $T_1$, $T_2$ können auch monolithisch aufgebaut sein.

Die vorgeschlagene Fehlerüberwachung ist auch bei magnetischen, induktiven und kapazitiven Meßeinrichtungen einsetzbar.

## Patentansprüche

1. Meßeinrichtung zur Messung der Relativlage zweier Objekte, bei der wenigstens ein bei der Abtastung eines Maßstabs mittels einer Abtasteinheit gewonnenes Signal gleichzeitig einer Auswerteeinheit und einer Fehlerüberwachungseinheit zugeführt wird, die bei fehlerhaften Signalparametern des wenigstens einen Signals ein Fehlersignal erzeugt, dadurch gekennzeichnet, daß das wenigstens eine Signal ($S_1$) mitsamt seinem invertierten Signal ($S_1'$) einem Phasendiskriminator (PD) der Auswerteeinheit (AW) zugeführt wird und daß das Fehlersignal (FS) der Fehlerüberwachungseinheit (FW) ein Gleichphasigschalten der Signale ($S_1$, $S_1'$) bewirkt, wobei das wenigstens eine Signal ($S_1$) einmal über den ersten Eingang eines ersten logischen Gatters ($U_1$) dem ersten Eingang des Phasendiskriminators (PD) und zum anderen mittels eines Inverters (I) als invertiertes Signal ($S_1'$) über den ersten Eingang eines zweiten logischen Gatters (UD) dem zweiten Eingang des Phasendiskriminators (PD) zugeführt wird und das Fehlersignal (FS) die zweiten Eingänge der beiden logischen Gatter ($U_1$, $U_2$) zum Gleichphasigschalten der beiden Signale ($S_1$, $S_1'$) beaufschlagt.

2. Meßeinrichtung zur Messung der Relativlage zweier Objekte, bei der wenigstens ein bei der Abtastung eines Maßstabs mittels einer Abtasteinheit gewonnenes Signal gleichzeitig einer Auswerteeinheit und einer Fehlerüberwachungseinheit zugeführt wird, die bei fehlerhaften Signalparametern des wenigstens einen Signals ein Fehlersignal erzeugt, dadurch gekennzeichnet, daß das wenigstens eine Signal ($S_1$) mitsamt seinem

invertierten Signal (S₁') einem Phasendiskriminator (PD) der Auswerteeinheit (AW) zugeführt wird und daß das Fehlersignal (FS) der Fehlerüberwachungseinheit (FW) ein Gleichphasigschalten der Signale (S₁, S₁') bewirkt, wobei das wenigstens eine Signal (S₁) einmal direkt dem ersten Eingang des Phasendiskriminators (PD) und zum anderen über den ersten Eingang eines logischen Gatters (O) als invertiertes Signal (S₁') dem zweiten Eingang des Phasendiskriminators (PD) zugeführt wird und das Fehlersignal (FS) den zweiten Eingang des logischen Gatters (O) zum Gleichphasigschalten der beiden Signale (S₁, S₁') beaufschlagt.

3. Meßeinrichtung nach Anspruch 1, dadurch gekennzeichnet, daß die logischen Gatter (U₁, U₂) Und-Gatter sind.

4. Meßeinrichtung nach Anspruch 2, dadurch gekennzeichnet, daß das logische Gatter (O) ein Exclusiv-Oder-Gatter ist.

## Claims

1. Measuring device for measuring the relative position of two objects, in which at least one signal derived by sensing a measuring scale with a sensing unit is applied simultaneously to an evaluating unit and to an error detection unit, which generates an error signal when there are erroneous parameters of the at least one signal, characterized in that the at least one signal (S₁) together with its inverted signal (S₁') are applied to a phase discriminator (PD) of the evaluation unit (AW) and in that the error signal (FS) of the error detection unit (FW) effects a like-phased switching of the signals (S₁, S₁'), wherein the at least one signal (S₁) is for the one part applied via the first input of a first logic gate (U₁) to the first input of the phase discriminator (PD) and for the other part by means of an inverter (I) as inverted signal (S₁') via the first input of a second logic gate (U₂) to the second input of the phase discriminator (PD) and the error signal (FS) acts on the second inputs of the two logic gates (U₁, U₂) for the like-phased switching of the two signals (S₁,S₁').

2. Measuring device for measuring the relative position of two objects, in which at least one signal derived by sensing a measuring scale with a sensing unit is applied simultaneously to an evaluating unit and to an error detection unit, which generates an error signal when there are erroneous parameters of the at least one signal, characterized in that the at least one signal (S₁) together with its inverted signal (S₁') are applied to a phase discriminator (PD) of the evaluation unit (AW) and in that the error signal (FS) of the error detection unit (FW) effects a like-phased switching of the signals (S₁, S₁'), wherein the at least one signal (S₁) is for the one part applied direct to the first input of the phase discriminator (PD) and for the other part via the first input of a logic gate (O) as inverted signal (S₁') to the second input of the phase discriminator (PD) and the error signal (FS) acts on the second input of the logic gate (O) for the like-phased switching of the two signals (S₁, S₁').

3. Measuring device according to claim 1, characterized in that the logic gates (U₁, U₂) are AND-gates.

4. Measuring device according to claim 2, characterized in that the logic gate (O) is an EXCLUSIVE-OR gate.

## Revendications

1. Dispositif de mesure pour mesurer la position relative de deux objets, dans lequel au moins un signal, obtenu lors de l'exploration d'une règle graduée au moyen d'une unité de balayage, est en même temps appliqué à une unité d'interprétation et à une unité de surveillance des erreurs laquelle délivre un signal d'erreurs en cas de paramètres défectueux d'au moins un signal, caractérisé par le fait qu'au moins l'un des signaux (S₁), avec son signal inversé (S₁'), est appliqué à un discriminateur de phase (PD) de l'unité d'interprétation (AW) et que le signal d'erreurs (FS) de l'unité de surveillance (FW) provoque un équilibrage des phases des signaux (S₁, S₁'), au moins l'un des signaux (S₁) étant appliqué, d'une part, par la première entrée d'une première porte logique (U₁) à la première entrée du discriminateur de phases (PD) et, d'autre part, au moyen d'un inverseur (1), étant appliqué, en tant que signal inversé (S₁'), à la seconde entrée du discriminateur de phases (PD) par la première entrée d'une seconde porte logique (U₂) et le signal d'erreurs (FS) commandant les secondes entrées des deux portes logiques (U₁, U₂) pour l'équilibrage des phases des deux signaux (S₁, S₁').

2. Dispositif de mesure pour mesurer la position relative de deux objets, dans lequel au moins un signal, obtenu lors de l'exploration d'une règle graduée au moyen d'une unité de balayage, est appliqué en même temps à une unité d'interprétation et à une unité de surveillance des erreurs laquelle délivre un signal d'erreurs en cas de paramètres défectueux d'au moins un signal, caractérisé par le fait qu'au moins l'un des signaux (S₁), avec son signal inversé (S₁'), est appliqué à un discriminateur de phases (PD) de l'unité d'interprétation (AW) et que le signal d'erreurs (FS) de l'unité de surveillance (FW) provoque un équilibrage des phases des signaux (S₁, S₁'), au moins l'un des signaux (S₁) étant appliqué, d'une part, directement à la première entrée du discriminateur de phases (PD) et, d'autre part, en tant que signal inversé (S₁'), par la première entrée d'une porte logique (O) à la seconde entrée du discriminateur de phases (PD) et le signal d'erreurs (FS) commandant la seconde entrée de la porte logique (O) pour l'équilibrage des phases des deux signaux ($S_1$, $S_1'$).

3. Dispositif de mesure selon la revendication 1, caractérisé par le fait que les portes logiques ($U_1$, $U_2$) sont des portes ET.

4. Dispositif de mesure selon la revendication 2, caractérisé par le fait que la porte logique (O) est une porte OU EXCLUSIF.

**Fig.1**

0 133 199

| a | b | c | d |
|---|---|---|---|
| 0 | 1 | 0 | 1 |
| 1 | 1 | 1 | 0 |
| 0 | 0 | 0 | 0 |
| 1 | 0 | 0 | 0 |

*Fig.2*

*Fig.3*

| a | b | c | d |
|---|---|---|---|
| 0 | 1 | 0 | 1 |
| 1 | 1 | 1 | 0 |
| 0 | 0 | 0 | 0 |
| 1 | 0 | 1 | 1 |

*Fig.4*